# EUROPÄISCHE PATENTANMELDUNG

(11) **EP 0 900 642 A1**
(43) Veröffentlichungstag der Anmeldung: **10.03.1999**
(21) Anmeldenummer: 98890227.6
(22) Anmeldetag: 05.08.1998
(51) Int. Cl.: B29C 47/62, B29C 47/40

(54) **Mehrschneckenextruder, insbesondere Doppelschneckenextruder**

(30) Priorität: 03.09.1997 AT 1473/97
(71) Anmelder: WEINGARTNER MASCHINENBAU GESELLSCHAFT m.b.H., A-4656 Kirchham 26 (AT)
(72) Erfinder: Fuchs, Erwin, 4813 Altmünser (AT)
(74) Vertreter: Hübscher, Heiner, Dipl.-Ing.

(57) **Zusammenfassung**

Ein Mehrschneckenextruder besteht aus in einem Gehäuse eingesetzten gegenläufigen Schnecken (20), deren Schneckengänge (1) ineinandergreifende Gangberge (2) und Gangtäler (3) bilden und die wenigstens zwei Axialabschnitte (21, 22, 23) jeweils in Zahl und Steigung unterschiedlicher Schneckengänge aufweisen. Um die Herstellungsbedingungen zu verbessern und über die Schneckenlänge vergleichmäßigte Verschleißverhältnisse zu erreichen, gehen benachbarte Axialabschnitte (21, 22, 23) einer Schnecke (20) innerhalb eines ringnutenfreien axialen Übergangsbereiches (24) ineinander über, wobei alle Gangtäler (3) unter Richtungsänderungen (α) und Verzweigungen bzw. Vereinigungen (V) durch den Übergangsbereich (24) hindurchverlaufen und zumindest einer der Gangberge (2) im Übergangsbereich (24) beginnt bzw. endet.

## Beschreibung

Die Erfindung bezieht sich auf einen Mehrschneckenextruder, insbesondere Doppelschneckenextruder, mit in einem Gehäuse eingesetzten gegenläufigen Schnecken, deren Schneckengänge ineinandergreifende Gangberge und Gangtäler bilden und die wenigstens zwei Axialabschnitte jeweils in Zahl und Steigung unterschiedlicher Schnekkengänge aufweisen.

Solche Extruder umfassen zwei oder mehr in einem angepaßten Gehäuse nebeneinander angeordnete zylindrische oder konische Schnecken, die im Gegenlauf miteinander kämmen, so daß sich geometrisch abgeschlossene, während der Schneckendrehung in axialer Richtung bewegende Kammern ergeben und eine Zwangsförderung für das die Kammern füllende Medium erreicht wird. Diese Mehrschneckenextruder werden in der Kunststoffindustrie wegen der Möglichkeit der druckbeaufschlagbaren Zwangsbewegung des Mediums als Kunststoff-Verarbeitungsmaschinen verwendet, um den Kunststoff einer Druckbeaufschlagung auszusetzen, zu kneten, aufzuschmelzen, zu mischen, zu homogenisieren oder auch zu entgasen und dabei zum Auslaß zu fördern, wozu in Abhängigkeit von den zu erzielenden Wirkungen Schnecken mit sich ändemder Gangzahl undloder Gangsteigung eingesetzt werden können. Die Schnecken bilden demnach Axialabschnitte in Zahl und/oder Steigung unterschiedlicher Schnekkengänge, wobei bisher die Axialabschnitte, deren Übergänge gleichzeitig Steigungsänderungen und Gangzahländerungen mit sich bringen, durch Ringnuten axial vollständig voneinander getrennt sind, welche Ringnuten durch Einstiche in Achsnormalebenen entstehen. Diese Ringnuten sollen dafür sorgen, daß ein unbehinderter Strömungsfluß aufrechterhalten bleibt und der sich entlang der Gangtäler bewegende Kunststoff nicht auf Grund einer Gangzahländerung durch einen auftretenden Gangberg blockiert wird. Außerdem erleichtert die Ringnut unter Berücksichtigung der üblichen Herstellungstoleranzen das ordnungsgemäße Ineinandergreifen der Gangberge und Gangtäler im Übergangsbereich der Axialabschnitte. Allerdings kommt es durch die Ringnuten zu einem unerwünschten Verschleißbild des Gehäuses, da die Gehäusewand im Bereich der Ringnuten im Gegensatz zu den übrigen Schneckenbereichen kaum einem Verschleiß unterworfen ist und nach einiger Betriebsdauer vorragende Ringstege an der Gehäusewand verbleiben, die vor allem den Einsatz von Schnecken unterschiedlicher Bauart im vorhandenen Gehäuse behindern oder gar ausschließen. Auch sind die Ringnuten oft für die Herstellung der Schneckengänge benachbarter Axialabschnitte mit gegenüber der Einstichbreite größer bemessenen Stirnfräsern störend und erzwingen die Bearbeitung der in die Ringnuten mündenden Gang bereiche mittels eigener Stirnfräser kleineren Durchmessers. Ähnliches gilt für die Herstellung dieser Schneckengänge durch Umfangsfräsen, Umfangsschleifen oder Wirbeln. Um den Gehäuseverschleiß im Bereich der Ringnuten zu verringern, wurde zwar bereits vorgeschlagen, die Ringnuten in einer zur Schneckenachse geneigten Ebene anzuordnen, doch konnten sich solche Konstruktionen wegen der damit verbundenen größeren Herstellungsschwierigkeiten nicht durchsetzen.

Wie die DE 23 64 507 A zeigt, ist zwar bei Einzelschnecken mit einem zweiten Gangtal, sogenannten Barriereschneckel, eine Gangzahländerung ohne Ringnuten an sich bekannt, doch handelt es sich hier nicht um zwei echte Schneckengänge, sondern nur um ein zweites Gangtal, wobei das erste Gangtal auslaufseitig und das zweite Gangtal einlaufseitig geschlossen sind, wodurch das geförderte Material zwangsweise über die vorhandene Barriere aus dem ersten in das zweite Gangtal hinwegfließen muß, um unter den auftretenden Scherkräften geschmolzen zu werden. Es kommt zu keiner Zwangsförderung, sondern wegen der Einzelschneckenanordnung, die wegen der Abwälzverhältnisse notwendig ist, nur zu einer reibungsbedingten Förderwirkung.

Der Erfindung liegt daher die Aufgabe zugrunde, einen Mehrschneckenextruder der eingangs geschilderten Art zu schaffen, der die Vorteile gegenläufiger Schnecken unterschiedlicher Gangzahl und Gangsteigung unter Vermeidung der sich durch die Ringnuten zwischen den Axialabschnitten ergebenden Nachteile zu nützen erlaubt.

Die Erfindung löst diese Aufgabe dadurch, daß benachbarte Axialabschnitte einer Schnecke in an sich bekannter Weise innerhalb eines ringnutenfreien axialen Übergangsbereiches ineinander übergehen, wobei alle Gangtäler unter Richtungsänderungen und Verzweigungen bzw. Vereinigungen durch den Übergangsbereich hindurchverlaufen und zumindest einer der Gangberge im Übergangsbereich beginnt bzw. endet. Die durchgehenden Gangtäler gewährleisten einen unbehinderten Kunststofffluß entlang der Schneckengänge, wobei die Richtungsänderungen die Steigungsänderungen berücksichtigen und sich durch die Verzweigungen bzw. Vereinigungen die Gangzahl erhöhen bzw. verringern läßt. Von den Gangbergen muß wegen der durchgehenden Gangtäler wenigstens einer unterbrochen sein, es können aber auch alle Berge unterbrochen sein, was den Homogenisiereffekt verbessert. Die Unterbrechung der Gangberge führt zu einem Beginn oder einem Ende eines Gangberges, wobei vorzugsweise dieser Beginn bzw. das Ende eine in einer Abwicklung dreieckige Grundrißform entsprechend den Verzweigungen bzw. Vereinigungen der Gangtäler besitzen. Der sich überlappende Übergang zwischen den Axialabschnitten führt zu einer gleichmäßigen Verschleißbelastung des zugehörenden Gehäuses ohne Gefahr eines Entstehens von Ringstegen, das Ineinandergreifen der Gangtäler und Gangberge erfolgt auch unter Berücksichtigung üblicher Herstellungstoleranzen im Übergangsbereich einwandfrei und nicht zuletzt bieten die ringnutfreien Übergänge mit gegenüber den Ringnuten verhältnismäßig geringen Richtungsänderungen der Schneckengänge auch günstigere Fertigungsbedingungen, die den Einsatz insbesondere von Wirbelwerkzeugen erleichtern.

In der Zeichnung ist der Erfindungsgegenstand rein schematisch veranschaulicht, und zwar zeigen
- Fig. 1: eine Schnecke für einen bekannten Mehrschneckenextruder in einer Mantelabwicklung und die
- Fig. 2, 3 und 4: verschiedene Ausführungsbeispiele von Schnecken erfindungsgemäßer Mehrschneckenextruder ebenfalls jeweils in einer Mantelabwicklung.

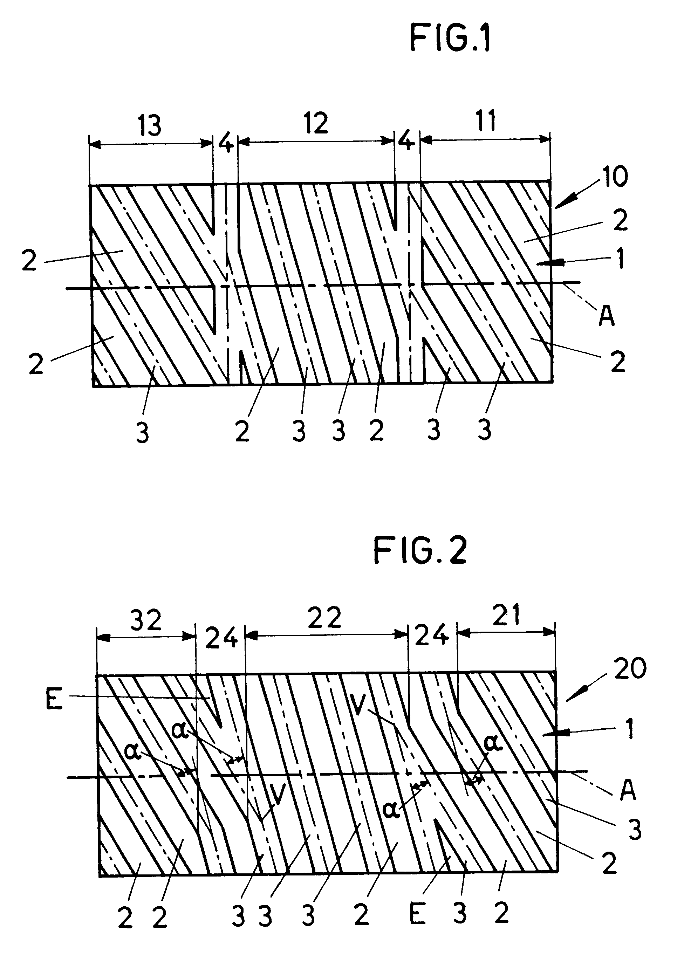

Wie in Fig. 1 angedeutet, weist eine Schnecke 10 bekannter Bauweise für Mehrschneckenextruder entlang der Schneckenachse A hintereinandergereihte Axialabschnitte 11, 12, 13 auf, deren Gangberge 2 und Gangtäler 3 bildende Schneckengänge 1 sich in Zahl und Steigung unterscheiden, wobei die einzelnen Axialabschnitte 11, 12, 13 jeweils durch achsnormale Ringnuten 4 voneinander getrennt sind.

Um eine solche Trennung der Axialabschnitte durch Ringnuten zu vermeiden, gehen bei den efindungsgemäßen Schnecken 20, 30, 40 die einander benachbarten Axialabschnitte 21, 22, 23, 31, 32, 33, 41, 42, 43 innerhalb eines axialen Übergangsbereiches 24, 34, 44 ineinander über, wobei alle Gangtäler 3 entsprechend der Steigungsänderungen unter Richtungsänderungen α, β, γ und unter Vereinigungen bzw. Verzweigungen V zur Gangzahländerung hindurchverlaufen und zumindest einer der Gangberge 2 unterbrochen ist und mit einem dreieckförmigen Ende E endet bzw. beginnt.

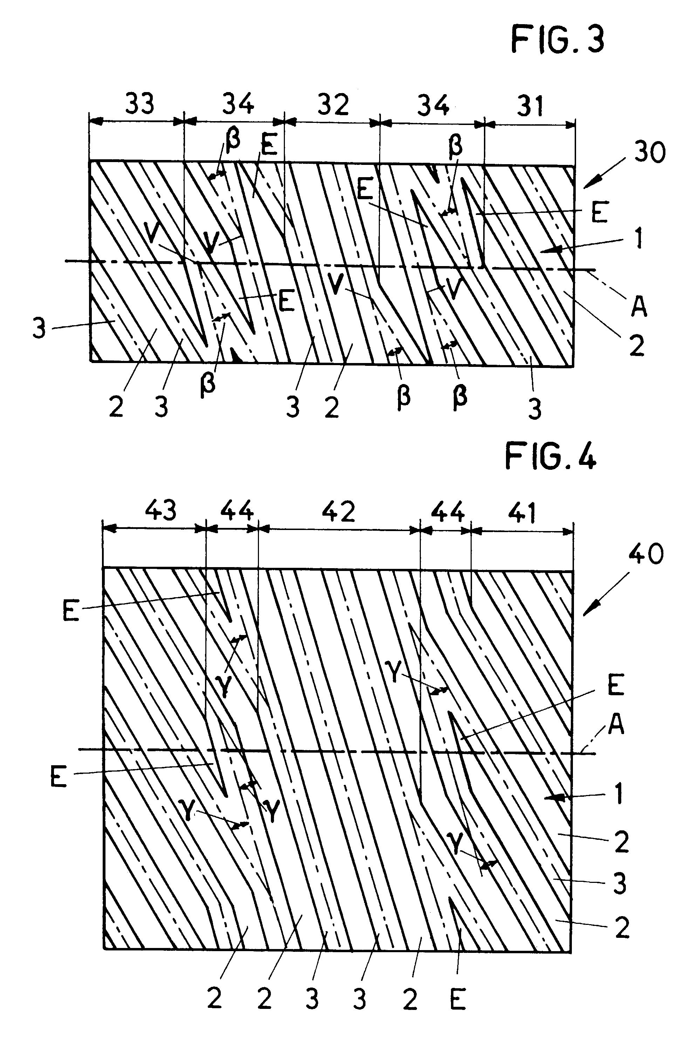

Gemäß dem Ausführungsbeispiel nach Fig. 2 weisen die Axialabschnitte 21, 22, 23 eine Gangzahländerung von 2 : 1 : 2 auf und die Gangsteigung ändert sich von einem größeren Wert zu einem kleineren und dann wieder zu einem größeren, wobei in den Übergangsbereichen 24 jeweils einer der Gangberge endet bzw. beginnt und einer der Gangberge wie alle Gangtäler hindurchgeht.

Gemäß dem Ausführungsbeispiel nach Fig. 3 sind bei sonst gleichen Ausbildungen lediglich in den Übergangsbereichen alle Gangberge unterbrochen und nur die Gangtäler hindurchverlaufend.

Gemäß dem Ausführungsbeispiel nach Fig. 4 ändert sich die Gangzahl von 4 : 2 : 4 und neben den durchgehenden Gangtälern sind jeweils zwei Gangberge unterbrochen und enden bzw. beginnen neu.

## Patentansprüche

1. Mehrschneckenextruder, insbesondere Doppelschneckenextruder, mit in einem Gehäuse eingesetzten gegenläufigen Schnecken (20, deren Schneckengänge (1) ineinandergreifende Gangberge (2) und Gangtäler (3) bilden und die wenigstens zwei Axialabschnitte (21, 22, 23) jeweils in Zahl und Steigung unterschiedlicher Schneckengänge aufweisen, dadurch gekennzeichnet, daß benachbarte Axialabschnitte (21, 22, 23; 31, 32, 33; 41, 42, 43) einer Schnecke (20, 30, 40) in an sich bekannter Weise innerhalb eines ringnutenfreien axialen Übergangsbereiches (24, 34, 44) ineinander übergehen, wobei alle Gangtäler (3) unter Richtungsänderungen (α β, γ) und Verzweigungen bzw. Vereinigungen (V) durch den Übergangsbereich (24, 34, 44) hindurchverlaufen und zumindest einer der Gangberge (2) im Übergangsbereich (24, 34, 44) beginnt bzw. endet.
